(19) Europäisches Patentamt
European Patent Office
Office européen des brevets

(11) **EP 3 344 965 B1**

(12) **EUROPÄISCHE PATENTSCHRIFT**

(45) Veröffentlichungstag und Bekanntmachung des Hinweises auf die Patenterteilung:
**08.09.2021   Patentblatt 2021/36**

(21) Anmeldenummer: **16744715.0**

(22) Anmeldetag: **25.07.2016**

(51) Int Cl.:
***G01L 5/16*** *(2020.01)*

(86) Internationale Anmeldenummer:
**PCT/EP2016/067605**

(87) Internationale Veröffentlichungsnummer:
**WO 2017/036671 (09.03.2017 Gazette 2017/10)**

(54) **VORRICHTUNG FÜR DIE KRAFT- UND MOMENTERFASSUNG**

DEVICE FOR FORCE AND MOMENTUM DETECTION

DISPOSITIF DE DETECTION DE FORCE ET DE COUPLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2015   EP 15183934**

(43) Veröffentlichungstag der Anmeldung:
**11.07.2018   Patentblatt 2018/28**

(73) Patentinhaber: **Kistler Holding AG**
**8408 ZH Winterthur (CH)**

(72) Erfinder: **KOHLER, Denis**
**8413 Neftenbach / ZH (CH)**

(56) Entgegenhaltungen:
EP-A2- 0 806 643       CN-A- 103 175 636
US-A- 4 802 371       US-A- 5 168 758
US-A1- 2015 120 051

- **Bob Metz: "OPTIMIZING 3-COMPONENT FORCE SENSOR INSTALLATION FOR SATELLITE FORCE LIMITED VIBRATION TESTING Optimizing 3-Component Force Sensor Installation for Satellite Force Limited Vibration Testing", 28th Space Simulation Conference Proceedings, 31 December 2014 (2014-12-31), XP055633091,**
- **Unknown: "INSTALLATION DRAWING MODEL (M)260A01 ICP TRIAXIAL FORCE SENSOR", , 26 March 2002 (2002-03-26), XP055727865, Retrieved from the Internet: URL:https://www.pcb.com/contentstore/docs/ PCB_Corporate/ForceTorque/Products/Drawing /PDF/12082-C.pdf [retrieved on 2020-09-04]**

## Beschreibung

### Technisches Gebiet

Die Erfindung betrifft eine Vorrichtung für die Kraft- und Momenterfassung nach dem Oberbegriff des unabhängigen Anspruchs.

### Stand der Technik

Die spanabhebende Bearbeitung ist nach wie vor die wichtigste Art des Formens und bildet eine Grundlage bei Fertigungsprozessen von technischen Erzeugnissen aller Art. Eine genaue Analyse der spanabhebenden Bearbeitung ist wichtig, um die Fertigungsprozesse zu optimieren. Daher werden während der spanabhebenden Bearbeitung Kräfte und Momente erfasst, mit welcher Information eine Quantifizierung der bei der Spanabhebung umgesetzten Energie, eine Bestimmung von Werkstoffcharakteristiken, eine Verschleissanalyse von Werkzeugen und eine bedarfsgerechte Auslegung von Maschinenstrukturen/- komponenten möglich ist.

Eine Vorrichtung für die Kraft- und Momenterfassung ist in der Schrift EP0806643A2 offenbart. Die Vorrichtung ist in Fig. 1 schematisch dargestellt. Auf einer T-förmigen Montageplattform 8 ist ein Werkstück 4 montiert, das von einem Werkzeug 5 bearbeitet wird. Ein Stamm der Montageplattform 8 ist zwischen zwei Schenkeln eines U-förmigen Ständers 9 gelagert. Je eine piezoelektrische Kraftmesszelle A, B ist zwischen dem Stamm der Montageplattform 8 und einem Schenkel des Ständers 9 angeordnet. Dabei sind die piezoelektrischen Kraftmesszellen A, B mittels einer Vorspannschraube 10 mechanisch vorgespannt. Die Vorspannschraube 10 durchsetzt die piezoelektrischen Kraftmesszellen A, B, den Stamm der Montageplattform 8 und die Schenkel des Ständers 9. Während der Bearbeitung des Werkstückes 4 wirkt eine Kraft F einseitig in Richtung der länglichen Ausdehnung der Vorspannschraube 10. Die einseitig wirkende Kraft F teilt sich hälftig auf die piezoelektrischen Kraftmesszellen A, B auf. Die piezoelektrische Kraftmesszelle A wird mit der Kraft $+1/2$ F entlastet, die piezoelektrische Kraftmesszelle B wird mit der Kraft $+1/2$ F belastet. Jede piezoelektrische Kraftmesszellen A, B weist piezoelektrische Aufnehmer auf. Die piezoelektrischen Aufnehmer sind kristallographisch so orientiert, dass eine auf sie wirkende Kraft elektrische Polarisationsladungen erzeugt. Die piezoelektrischen Aufnehmer haben entgegengesetzte Polarisationsrichtungen. Eine Summe der elektrischen Polarisationsladungen der piezoelektrischen Kraftmesszellen A, B ist also proportional zur Grösse der wirkenden Kraft F.

Eine solche Vorrichtung für die Kraft- und Momenterfassung ist unter einer Typenbezeichnung 9119AA1 der Kistler Gruppe kommerziell erhältlich, Details sind auf einem Datenblatt 9119AA1_003_060e-01.13 beschrieben. Die Vorrichtung weist vier piezoelektrische Kraftmesszellen auf, von denen jeweils zwei beidseitig vom Stamm der Montageplattform angeordnet sind. Die piezoelektrischen Kraftmesszellen erfassen drei orthogonale Kraftkomponenten $F_x$, $F_y$, $F_z$ der Kraft F. Elektrische Polarisationsladungen werden komponentenspezifisch abgegriffen und über Signalleitungen an einen Ladungsverstärker abgeleitet und dort elektrisch verstärkt und danach in einer Auswerteeinheit in eine elektrische Spannung gewandelt. Die Vorrichtung ist durch Parameter wie Messbereich, Empfindlichkeit, Eigenfrequenz, Gewicht und eine gesamte Grundfläche gekennzeichnet. Der Messbereich der Vorrichtung liegt im Bereich von -4kN bis +4kN für die Kraftkomponenten $F_x$, $F_y$, $F_z$. Die Empfindlichkeit der Vorrichtung beträgt ~26pC/N für die Kraftkomponenten $F_x$, $F_z$ und ~13pC/N für die Kraftkomponente $F_y$. Die Eigenfrequenz der Vorrichtung beträgt für die Kraftkomponente $F_x$ ~6.0kHz, für die Kraftkomponente $F_y$ ~6.4kHz und für die Kraftkomponente $F_z$ ~6.3kHz. Ihr Gewicht beträgt 930g und ihre gesamte Grundfläche misst 109*80mm.

Nun ist die Empfindlichkeit der Vorrichtung für die Kraft- und Momenterfassung aus dem Stand der Technik nach dem Datenblatt 9119AA1_003_060e-01.13 für die verschiedenen Kraftkomponenten anisotrop. Insbesondere in einer horizontalen Arbeitsebene der Montageplattform ist die Empfindlichkeit der Kraftkomponenten $F_x$ mit ~26pC/N doppelt so hoch wie diejenige der Kraftkomponente $F_y$ mit ~13pC/N. Da die spanabhebende Bearbeitung oft rotationssymmetrisch bezüglich der horizontalen Arbeitsebene erfolgt, ist eine tatsächliche Empfindlichkeit der Vorrichtung in der Arbeitsebene durch die niedrige Empfindlichkeit der Kraftkomponente $F_y$ vorgegeben. Auch ist eine Erhöhung der Eigenfrequenz der Vorrichtung erwünscht, da die tiefste Eigenfrequenz $F_x$ ~6.0kHz eine Verwendung der Vorrichtung auf maximale Spindeldrehzahlen von ~60.000 Umdrehungen pro Minute begrenzt.

Die Schrift US20150120051A1 zeigt eine Vorrichtung für die Kraft- und Momenterfassung mit vier piezoelektrischen Kraftmesszellen, welche in einer horizontalen Arbeitsebene gegen Endflächen einer Montageplattform mechanisch vorgespannt sind. Die Endflächen stehen im rechten Winkel zueinander. Die piezoelektrischen Kraftmesszellen erfassen orthogonale Kraftkomponenten über den Longitudinaleffekt und über den Schubeffekt. Jede piezoelektrische Kraftmesszelle ist über zwei Vorspannschrauben mechanisch vorgespannt.

Aufgabe der Erfindung ist es, zumindest einen der Parameter Empfindlichkeit und Eigenfrequenz einer Vorrichtung für die Kraft- und Momenterfassung zu erhöhen.

## Darstellung der Erfindung

Diese Aufgabe wird durch die Merkmale des unabhängigen Anspruchs gelöst.

Die Erfindung betrifft eine Vorrichtung für die Kraft- und Momenterfassung; mit piezoelektrischen Kraftmesszellen, welche in einer horizontalen Arbeitsebene gegen Endflächen einer Montageplattform mechanisch vorgespannt sind und Kraftkomponenten erfassen; wobei mindestens eine erste Endfläche der Montageplattform schräg zu mindestens einer zweiten Endfläche angeordnet ist.

Es ist erkannt worden, dass sich die Anisotropie der Empfindlichkeit in der horizontalen Arbeitsebene der Montageplattform vermeiden lässt, wenn die piezoelektrischen Kraftmesszellen schräg zueinander angeordnet werden. Denn eine der Kraftkomponenten wird über einen Schubeffekt erfasst, während die andere Kraftkomponente über einen Longitudinaleffekt erfasst wird. Dabei ist die Empfindlichkeit des Schubeffektes doppelt so hoch wie diejenige des Longitudinaleffektes. Durch die schräge Anordnung der piezoelektrischen Kraftmesszellen an Endflächen der Montageplattform werden die beiden Kraftkomponenten der horizontalen Arbeitsebene nun je einmal über den Schubeffekt und einmal über den Longitudinaleffekt erfasst. Die Empfindlichkeit der erfindungsgemässen Vorrichtung in der horizontalen Arbeitsebene ist isotrop.

## Kurze Beschreibung der Zeichnungen

Im Folgenden wird die Erfindung beispielhaft unter Beizug der Figuren näher erklärt. Es zeigen

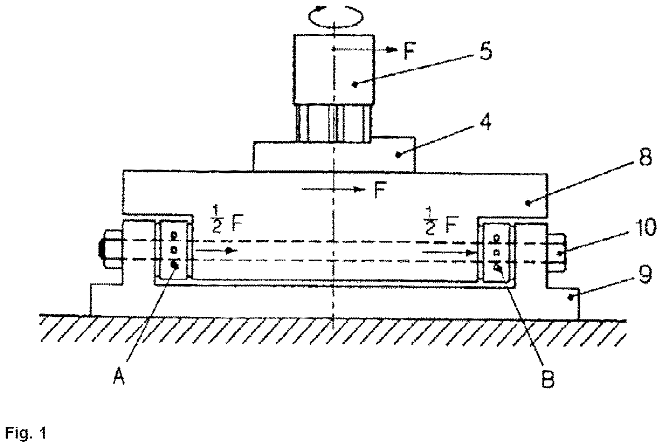

Fig. 1    eine schematische Ansicht einer bekannten Vorrichtung für die Kraft- und Momenterfassung aus dem Stand der Technik;

Fig. 2    eine schematische Draufsicht eines Teiles einer ersten Ausführungsform einer erfindungsgemässen Vorrichtung für die Kraft- und Momenterfassung;

Fig. 3    ein schematischer Schnitt entlang einer horizontalen Koordinatenachse durch ein Teil der ersten Ausführungsform einer erfindungsgemässen Vorrichtung nach Fig. 2;

Fig. 4    eine schematische Draufsicht eines Teiles einer zweiten Ausführungsform einer erfindungsgemässen Vorrichtung für die Kraft- und Momenterfassung;

Fig. 5    ein schematischer Schnitt entlang einer horizontalen Koordinatenachse durch einen Teil der zweiten Ausführungsform einer erfindungsgemässen Vorrichtung nach Fig. 4;

Fig. 6    eine schematische Ansicht einer ersten Ausführungsform einer Signalableitung der erfindungsgemässen Vorrichtung nach Fig. 2 bis 5;

Fig. 7    eine schematische Ansicht einer zweiten Ausführungsform einer Signalableitung der erfindungsgemässen Vorrichtung nach Fig. 2 bis 5; und

Fig. 8    eine schematische Ansicht einer dritten Ausführungsform einer Signalableitung der erfindungsgemässen Vorrichtung nach Fig. 2 bis 5.

## Wege zur Ausführung der Erfindung

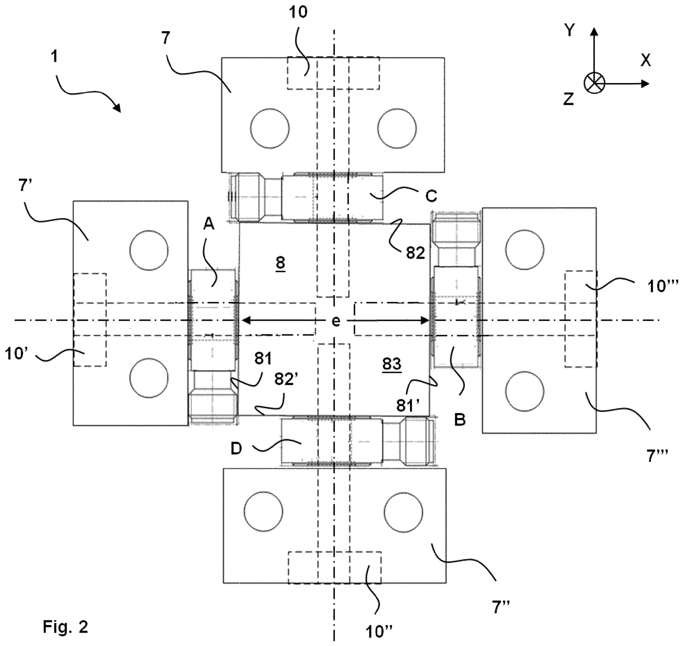

Fig. 2 bis 5 zeigen zwei Ausführungsformen einer erfindungsgemässen Vorrichtung 1 für die Kraft- und Momenterfassung. Die Vorrichtung 1 ist in einem orthogonalen Koordinatensystem mit den Koordinatenachsen X, Y, Z angeordnet. Die Vorrichtung 1 weist eine Montageplattform 8 aus mechanisch widerstandsfähigem und steifem Material wie aus Reinmetallen, Nickellegierungen, Kobaltlegierungen, Eisenlegierungen, Keramiken, Kunststoffen, usw. auf. Die Montageplattform 8 kann mit einem Werkstück oder einem Werkzeug montiert werden. Werkzeug und Werkstück sind in den Figuren nicht dargestellt. So kann die Montageplattform 8 über einen in den Figuren ebenfalls nicht dargestellten Adapter an einer Maschine zur spanabhebenden Bearbeitung montiert werden.

Erfindungsgemäß ist die Montageplattform 8 ein Quader mit einer rechteckigen Grundfläche 83, welche Grundfläche 83 in einer horizontalen Arbeitsebene XY angeordnet ist. Die Montageplattform 8 weist vier rechteckige Endflächen 81, 81', 82, 82' auf, welche Endflächen 81, 81', 82, 82' senkrecht auf der Grundfläche 83 stehen. Eine erste Koordinatenachse X ist normal zu den ersten Endflächen 81, 81', eine zweite Koordinatenachse Y ist normal zu den zweiten Endflächen 82, 82'. Eine dritte Koordinatenachse Y steht senkrecht auf der horizontalen Arbeitsebene XY. Anders ausgedrückt, zwei erste Endflächen 81, 81' sind in einer ersten vertikalen Ebene YZ angeordnet, und zwei zweite Endflächen 82, 82' sind in einer zweiten vertikalen Ebene XZ angeordnet. Die erste vertikale Ebene YZ steht schräg zur zweiten vertikalen Ebene XZ. Mit dem Adjektiv "schräg" wird ein von Null verschiedener Winkel bezeichnet, unter dem beiden vertikalen Ebenen YZ, XZ zueinander stehen. Auf jeder ersten Endfläche 81, 81' ist mittig entlang der ersten Koordinatenachse X ein Gewinde für eine Vorspannschraube 10, 10' angeordnet. Auf jeder zweiten Endfläche 82, 82' ist mittig entlang der zweiten Koordinatenachse Y ein Gewinde für eine Vorspannschraube 10, 10' angeordnet. Die Grundfläche 83 der Montageplattform 8 ist beliebig gross, jedoch ist sie vorzugsweise kleiner/gleich 100x100mm, vorzugsweise kleiner/gleich 80x80mm, vorzugsweise kleiner/gleich 50x50mm, vorzugsweise kleiner/gleich 25x25mm, vorzugsweise kleiner/gleich 20x20mm. Eine Höhe der Montageplattform 8 ist kleiner/gleich 30mm, vorzugsweise kleiner/gleich 25mm, vorzugsweise kleiner/gleich 20mm. Somit ist eine Grösse der Endflächen 81, 81', 82, 82' kleiner/gleich 100x30mm, vorzugsweise kleiner/gleich 80x30mm, vorzugsweise kleiner/gleich 50x25mm, vorzugsweise kleiner/gleich 25x25mm, vorzugsweise kleiner/gleich 20x20mm.

Die Vorrichtung 1 weist Platten 7, 7', 7", 7''' aus mechanisch widerstandsfähigem und steifem Material wie aus Reinmetallen, Nickellegierungen, Kobaltlegierungen, Eisenlegierungen, Keramiken, Kunststoffen, usw.. Erfindungsgemäß weist jede Platte 7, 7', 7", 7''' eine rechteckige Grundfläche 73 auf, welche Grundfläche 73 in der horizontalen Arbeitsebene XY angeordnet ist. Die Platten 7, 7', 7", 7''' weisen entlang der ersten und zweiten Koordinatenachse X, Y orientierte Durchgänge für Vorspannschrauben 10, 10', 10", 10''' auf. Die Grundfläche 73 einer Platte 7, 7', 7", 7''' ist beliebig gross, jedoch ist sie vorzugsweise kleiner/gleich 100X100mm, vorzugsweise kleiner/gleich 80x80mm, vorzugsweise kleiner/gleich 50x50mm, vorzugsweise kleiner/gleich 25x25mm, vorzugsweise kleiner/gleich 20x20mm. Eine Höhe einer Platte 7, 7', 7", 7''' ist kleiner/gleich 30mm, vorzugsweise kleiner/gleich 25mm, vorzugsweise kleiner/gleich 20mm. Vorteilhafterweise weist die Vorrichtung 1 vier oder mehr Platten 7, 7', 7", 7''' auf.

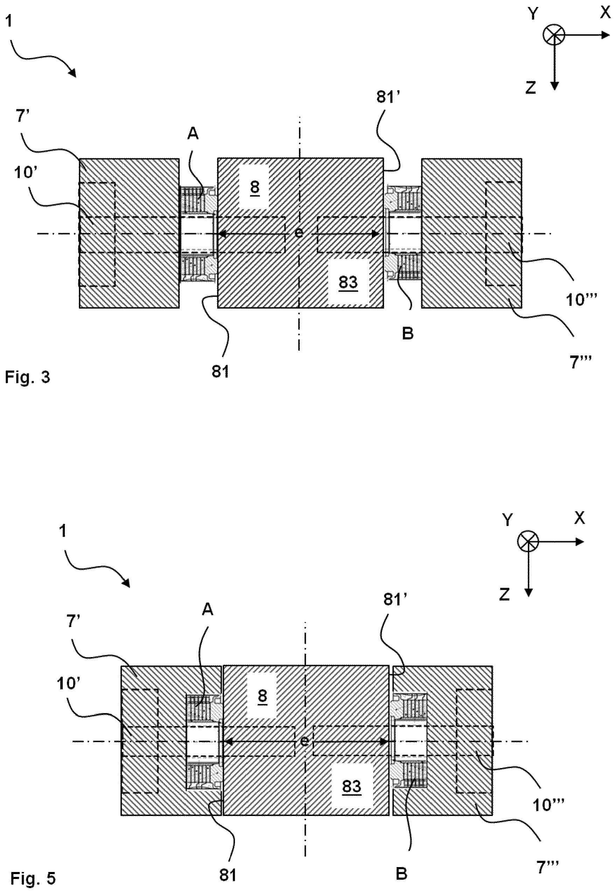

Eine gesamte Grundfläche der Vorrichtung 1 setzt sich aus der Grundfläche 83 der Montageplattform 8 und den Grundflächen 73 von vier Platten 7, 7', 7", 7''' zusammen und beträgt für die Vorrichtung 1 in der Ausführungsform nach Fig. 3 vorzugsweise 75*75mm. Die bekannte Vorrichtung für die Kraft- und Momenterfassung aus dem Stand der Technik nach dem Datenblatt 9119AA1_003_060e-01.13 weist bei einem Gewicht m'=900g eine gesamte Grundfläche von 109X80mm bei einer Höhe von 25mm auf. Im Vergleich mit der gesamten Grundfläche der bekannten Vorrichtung ist die gesamte Grundfläche der erfindungsgemässen Vorrichtung 1 ~35% kleiner. Dementsprechend ist auch ein Gewicht m der erfindungsgemässen Vorrichtung 1 ~35% kleiner und beträgt ~580g. Dies hat einen Einfluss auf eine Eigenfrequenz f der erfindungsgemässen Vorrichtung 1. Unter der Annahme, dass die erfindungsgemässe Vorrichtung 1 eine lineare Federschwingung ausführt, ist die Eigenfrequenz f proportional zum Gewicht m:

$$f \propto \sqrt{(1/m)}$$

Für ein Gewicht m der erfindungsgemässen Vorrichtung 1, welches ~35% kleiner ist als dasjenige der bekannten Vorrichtung, resultiert eine ~25% höhere Eigenfrequenz f der erfindungsgemässen Vorrichtung 1.

Die Vorrichtung 1 weist mehrere piezoelektrische Kraftmesszellen A, B, C, D auf. Vorteilhafterweise sind die piezoelektrischen Kraftmesszellen A, B, C, D hohlzylinderförmig mit einem zentralen Durchgang für Vorspannschrauben 10, 10', 10", 10'''. Eine Hohlzylinderhöhe der piezoelektrischen Kraftmesszellen A, B, C, D ist kleiner/gleich 10mm. Ein Hohlzylinderdurchmesser der piezoelektrischen Kraftmesszellen A, B, C, D ist kleiner/gleich 20mm. Erfindungsgemäß weist die Vorrichtung 1 vier piezoelektrischen Kraftmesszellen A, B, C, D auf. In der horizontalen Arbeitsebene XY ist an jeder Endfläche 81, 81', 82, 82' der Montageplattform 8 eine piezoelektrische Kraftmesszelle A, B, C, D angeordnet. Erste piezoelektrische Kraftmesszellen A, B sind entlang der ersten Koordinatenachse X mittig an den ersten Endflächen 81, 81' angeordnet, zweite piezoelektrische Kraftmesszellen sind entlang der zweiten Koordinatenachse Y mittig an den zweiten Endfläche 82, 82' angeordnet. Die piezoelektrischen Kraftmesszellen A, B, C, D sind in gleicher Entfernung e zueinander angeordnet. Die Vorrichtung 1 weist somit eine kreuzförmige Anordnung von vier piezoelektrischen Kraftmesszellen A, B, C, D in einer horizontalen Arbeitsebene XY an einer Arbeitsplattform 8 auf. Ein Ausnutzungsverhältnis einer Summe der Flächen der Hohlzylinderdurchmesser der piezoelektrischen Kraftmesszellen A, B, C, D zu einer Summe der Flächen der Endflächen 81, 81', 82, 82' ist grösser/gleich 25%, vorzugsweise 50%. In den Ausführungsformen nach Fig. 3 und 4 beträgt die Grösse der Hohlzylinderdurchmesser 20mm und die Grösse der Endflächen 81, 81', 82, 82' beträgt 25x25mm. Daraus resultiert ein Ausnutzungsverhältnis von 50%. Bei der bekannten Vorrichtung für die Kraft- und Momenterfassung aus dem Stand der Technik nach dem Datenblatt 9119AA1_003_060e-01.13 sind die piezoelektrischen Kraftmesszellen nur an zwei der vier Endflächen angeordnet, und auch an diesen zwei Endflächen ist die Grösse der Hohlzylinderdurchmesser weniger als halb so gross wie die Grösse der Endflächen. An zwei weiteren der vier Endflächen sind keine piezoelektrischen Kraftmesszellen angeordnet. Daraus resultiert ein Ausnutzungsverhältnis von kleiner 25%.

In der ersten Ausführungsform der Vorrichtung 1 nach Fig. 2 und 3, die nicht durch die beanspruchte Erfindung gedeckt ist, sind die piezoelektrischen Kraftmesszellen A, B, C, D auf ebenen Endflächen 81, 81', 82, 82' angeordnet.

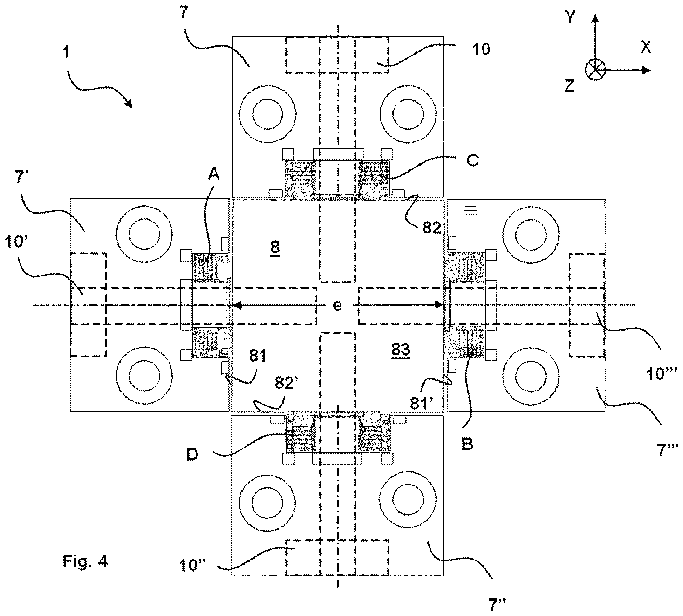

In der erfindungsgemäßen Ausführungsform der Vorrichtung 1 nach Fig. 4 und 5 sind die piezoelektrischen Kraftmesszellen A, B, C, D in Aussparungen der Platte 7, 7', 7", 7''' angeordnet. Die piezoelektrischen Kraftmesszellen A, B, C, D sind weitgehend vollständig in Aussparungen der Platte 7, 7', 7", 7''' angeordnet. Dabei wird das Adjektiv "weitgehend" so verstanden, dass eine piezoelektrische Kraftmesszelle A, B, C, D mit einer Variation von $\pm 10\%$ in eine Aussparung passt. Verglichen mit der ersten Ausführungsform nach Fig. 2 und 3 reduziert die Anordnung der piezoelektrischen Kraftmesszellen A, B, C, D in Aussparungen der Platte 7, 7', 7", 7''' die äussere Abmessung der Vorrichtung 1 um ein Mehrfaches der Hohlzylinderhöhe der piezoelektrischen Kraftmesszellen A, B, C, D. Auch erniedrigen die Aussparungen der Endflächen 81, 81', 82, 82' das Gewicht der Montageplattform 8. Verglichen mit der Ausführungsform nach Fig. 2 führt die Reduktion der äusseren Abmessung der Vorrichtung 1 und die Erniedrigung des Gewichtes m der Montageplattform 8 zu einer höheren Eigenfrequenz f der Vorrichtung 1 in der Ausführungsform nach Fig. 3.

Die piezoelektrischen Kraftmesszelle A, B, C, D sind unter mechanischer Vorspannung an der Montageplattform 8 angeordnet. Dazu sind die ersten piezoelektrischen Kraftmesszellen A, B entlang der ersten Koordinatenachse X mittels einer ersten und einer zweiten Vorspannschraube 10, 10' gegen die ersten Endflächen 81, 81' mechanisch vorgespannt. Die zweiten piezoelektrischen Kraftmesszellen C, D sind entlang der zweiten Koordinatenachse Y mittels einer dritten und einer vierten Vorspannschraube 10", 10''' gegen die zweiten Endflächen 82, 82' mechanisch vorgespannt. Die Vorspannschrauben 10, 10', 10", 10''' sind aus mechanisch widerstandsfähigem und steifem Material wie aus Reinmetallen, Nickellegierungen, Kobaltlegierungen, Eisenlegierungen, Keramiken, Kunststoffen, usw.. Die Vorspannschrauben 10, 10', 10", 10''' durchdringen die Durchgänge der Platten 7, 7', 7", 7''' und die zentralen Durchgänge der piezoelektrischen Kraftmesszellen A, B, C, D mittig und sind in den Gewinden der Endflächen 81, 81', 82, 82' der Montageplattform 8 verschraubt. Schraubenköpfe der Vorspannschrauben 10, 10', 10", 10''' sind in den Durchgängen der Platten 7, 7', 7", 7''' versenkt. Mittels der Vorspannschrauben 10, 10', 10", 10''' sind die piezoelektrischen Kraftmesszellen A, B, C, D und die Montageplattform 8 an den Platten 7, 7', 7", 7''' gelagert. Aufgrund der mechanischen Vorspannung kann eine Kraft F als Druckkraft oder als Zugkraft erfasst werden. Auch gewährleistet die mechanische Vorspannung einen sehr guten elektrischen Kontakt zwischen piezoelektrischen Aufnehmern 6, 6', 6" und Elektroden.

Jede piezoelektrische Kraftmesszelle A, B, C, D weist mehrere piezoelektrische Aufnehmer 6, 6', 6" auf. Die piezoelektrischen Aufnehmer 6, 6', 6" sind zylinderförmig und bestehen aus piezoelektrischem Kristallmaterial wie Quarz ($SiO_2$ Einkristall), Calcium-Gallo-Germanat ($Ca_3Ga_2Ge_4O_{14}$ oder CGG), Langasit ($La_3Ga_5SiO_{14}$ oder LGS), Turmalin, Galliumorthophosphat, usw.. Die piezoelektrischen Aufnehmer 6, 6', 6" sind kristallographisch so orientiert geschnitten, dass sie eine hohe Empfindlichkeit für eine zu erfassende Kraft F oder für ein zu erfassendes Moment M haben. Die kristallographische Orientierung der hohen Empfindlichkeit wird als Polarisationsrichtung bezeichnet. Die piezoelektrischen Aufnehmer 6, 6', 6" der piezoelektrischen Kraftmesszellen A, B sind mit entgegengesetzten Polarisationsrichtungen entlang der ersten Koordinatenachse X angeordnet, die piezoelektrischen Aufnehmer 6, 6', 6" der piezoelektrischen Kraftmesszellen C, D sind mit entgegengesetzten Polarisationsrichtungen entlang der zweiten Koordinatenachse Y angeordnet.

Vorteilhafterweise sind Oberflächen der piezoelektrischen Aufnehmer 6, 6', 6" so orientiert, dass auf den gleichen Oberflächen auf denen eine Kraft F einwirkt, auch negative und positive elektrischer Polarisationsladungen erzeugt werden. Bei mechanischer Belastung wirkt die Kraft F als Druckkraft und es werden negative Polarisationsladungen erzeugt; bei mechanischer Entlastung wirkt die Kraft F als Zugkraft und es werden positive Polarisationsladungen erzeugt. Die Kraft F kann eine Normalkraft oder eine Schubkraft sein. Somit wird zwischen einem Longitudinaleffekt und einem Schubeffekt unterschieden. Beim Longitudinaleffekt werden elektrische Polarisationsladungen auf Oberflächen erzeugt, deren Flächennormale parallel zu einer Wirkachse der Normalkraft ist. Beim Schubeffekt werden elektrische Polarisationsladungen auf Oberflächen erzeugt, deren Flächennormale senkrecht zu einer Wirkachse der Schubkraft ist. Vorteilhafterweise weist jede Kraftmesszelle A, B, C, D drei piezoelektrische Aufnehmer 6, 6', 6" auf.

Jeder piezoelektrische Aufnehmer 6, 6', 6" erfasst drei Kraftkomponenten $F_x$, $F_y$, $F_z$ der Kraft F. Bei den ersten piezoelektrischen Kraftmesszellen A, B entlang der ersten Koordinatenachse X erfasst ein erster piezoelektrischer Aufnehmer 6 eine erste Kraftkomponente $F_x$ über den Longitudinaleffekt, ein zweiter piezoelektrischer Aufnehmer 6' erfasst eine zweite Kraftkomponente $F_y$ über den Schubeffekt, und ein dritter piezoelektrischer Aufnehmer 6" erfasst eine dritte Kraftkomponente $F_z$ über den Schubeffekt. Bei den zweiten piezoelektrischen Kraftmesszellen C, D entlang der zweiten Koordinatenachse Y erfasst der erste piezoelektrische Aufnehmer 6 die erste Kraftkomponente $F_x$ über den Schubeffekt, der zweite piezoelektrische Aufnehmer 6' erfasst die zweite Kraftkomponente $F_y$ über den Longitudinaleffekt, und der dritte piezoelektrische Aufnehmer 6" erfasst die dritte Kraftkomponente $F_z$ über den Schubeffekt. Die beiden Kraftkomponenten $F_x$, $F_y$ der horizontalen Arbeitsebene XY werden somit je einmal über den Schubeffekt und einmal über den Longitudinaleffekt erfasst. Die Vorrichtung 1 weist dadurch in der horizontalen Arbeitsebene XY eine isotrope Empfindlichkeit auf.

Die Vorrichtung 1 weist parallel zur Wirkachse einer Normalkraft eine Druckfestigkeit auf und sie weist parallel zur Wirkachse einer Schubkraft eine Schubsteifigkeit auf. Die Schubkraft wirkt senkrecht zur Normalkraft. Nun ist die Drucksteifigkeit bekanntermassen grösser als die Schubsteifigkeit. So gibt das Datenblatt 9017C_000-960d-01.14 für einen Dreikomponenten-Kraftsensor mit drei piezoelektrischen Kraftmesszellen eine Drucksteifigkeit von ~1400N/$\mu$m

und eine Schubsteifigkeit von ~300N/μm an. Dementsprechend ist die Druckfestigkeit der erfindungsgemässen Vorrichtung 1 ~4.7-mal so gross wie ihre Schubsteifigkeit. Die vier piezoelektrischen Kraftmesszellen A, B, C, D der Vorrichtung 1 sind in der horizontalen Arbeitsebene XY kreuzförmig an der Arbeitsplattform 8 angeordnet. Eine Steifigkeit ist eine Summe aus Druckfestigkeit und Schubsteifigkeit. Entlang der ersten Koordinatenachse X ist die Steifigkeit die Summe der Druckfestigkeit der beiden piezoelektrischen Kraftmesszellen A, B und der Schubsteifigkeit der beiden piezoelektrischen Kraftmesszellen C, D. Entlang der zweiten Koordinatenachse Y ist die Steifigkeit die Summe der Druckfestigkeit der beiden piezoelektrischen Kraftmesszellen C, D und der Schubsteifigkeit der beiden piezoelektrischen Kraftmesszellen A, B. Die Steifigkeit der erfindungsgemässen Vorrichtung 1 ist somit in der horizontalen Arbeitsebene XY isotrop.

Hierin unterscheidet sich die erfindungsgemässe Vorrichtung 1 von der bekannten Vorrichtung für die Kraft- und Momenterfassung aus dem Stand der Technik nach der Schrift EP0806643A2. Diese bekannte Vorrichtung lehrt die Anordnung von vier piezoelektrischen Kraftmesszellen A, B alle entlang einer Koordinatenachse Y einer horizontalen Arbeitsebene XY. Entlang der Koordinatenachse Y ist die Steifigkeit gleich der Summe der Druckfestigkeit der vier piezoelektrischen Kraftmesszellen A, B. Entlang der Koordinatenachse X ist die Steifigkeit gleich der Summe der Schubsteifigkeit der vier piezoelektrischen Kraftmesszellen A, B. Die Steifigkeit der bekannten Vorrichtung ist somit entlang der Koordinatenachse Y grösser als entlang der Koordinatenachse X. Die Steifigkeit der bekannten Vorrichtung ist in der horizontalen Arbeitsebene XY daher anisotrop.

Die isotrope Steifigkeit der erfindungsgemässen Vorrichtung 1 hat einen Einfluss auf deren Eigenfrequenz f. So weist die bekannte Vorrichtung für die Kraft- und Momenterfassung aus dem Stand der Technik nach dem Datenblatt 9119AA1_003_060e-01.13 anisotrope Eigenfrequenzen für die Kraftkomponente $F_x$ ~6.0kHz und für die Kraftkomponente $F_y$ ~6.4kHz auf. Bei rotationssymmetrischer spanabhebender Bearbeitung in der horizontalen Arbeitsebene XY und anisotropen Eigenfrequenzen wie bei der bekannten Vorrichtung ist eine tatsächliche Eigenfrequenz durch die niedrigere Eigenfrequenz der Koordinatenachse X vorgegeben. Die Eigenfrequenz f der erfindungsgemässen Vorrichtung 1 in der horizontalen Arbeitsebene XY ist somit isotrop.

Die piezoelektrischen Aufnehmer 6, 6', 6" der piezoelektrischen Kraftmesszellen A, B, C, D sind vorteilhafterweise scheibenförmig mit einem zentralen Durchgang. Eine Scheibenmantelhöhe der piezoelektrischen Aufnehmer 6, 6', 6" ist rund 10mal kleiner als ein Scheibendurchmesser der piezoelektrischen Aufnehmer 6, 6', 6". Die Kraft F wird über zwei Oberflächen der piezoelektrischen Aufnehmer 6, 6', 6" eingeleitet. Die Oberflächen liegen in der Ebene des Scheibendurchmessers der piezoelektrischen Aufnehmer 6, 6', 6". Jeder Oberfläche ist eine Elektrode zum Abgreifen der elektrischen Polarisationsladungen zugeordnet. Die Elektroden sind in den Figuren nicht dargestellt. Die Elektroden bestehen aus elektrisch leitendem Metall wie Stahl, Kupfer, Kupferlegierungen, usw.. Jede Elektrode ist im flächigen elektrischen Kontakt mit der ihr zugeordneten Oberfläche. Die Elektroden sind vorteilhafterweise scheibenförmig mit einem zentralen Durchgang. Jeder piezoelektrische Aufnehmer 6, 6', 6" ist zwischen zwei seinen Oberflächen zugeordneten Elektroden angeordnet. Diese Elektroden werden in Signalelektroden und Gegenelektroden unterschieden. Eine einer Oberfläche eines piezoelektrischen Aufnehmers 6, 6', 6" zugeordnete Elektrode die auch der Montageplattform 8 zugewandt ist, dient als Signalelektrode. Von der Signalelektrode abgegriffene elektrische Polarisationsladungen werden als Signal verwendet. Eine einer Oberfläche eines piezoelektrischen Aufnehmers 6, 6', 6" zugeordnete Elektrode die von der Montageplattform 8 abgewandt ist, dient als Gegenelektrode. Die Gegenelektrode ist auf einem Erdpotenzial.

Jede piezoelektrische Kraftmesszelle A, B, C, D weist ein zylinderförmiges Gehäuse aus mechanisch widerstandsfähigem und steifem Material wie aus Reinmetallen, Nickellegierungen, Kobaltlegierungen, Eisenlegierungen, Keramiken, Kunststoffen, usw. auf. Vorteilhafterweise ist das Gehäuse ein Hohlzylinder mit einem zentralen Durchgang. Das Gehäuse weist eine innere Mantelfläche, eine äussere Mantelfläche und zwei Grundflächen auf. Die piezoelektrischen Aufnehmer 6, 6', 6" einer jeden piezoelektrischen Kraftmesszelle A, B, C, D sind im Raum zwischen der inneren Mantelfläche und der äusseren Mantelfläche angeordnet. Die piezoelektrischen Aufnehmer 6, 6', 6" sind übereinander gestapelt. Die Elektroden der übereinander gestapelten piezoelektrischen Aufnehmerelemente sind gegeneinander und gegenüber dem Gehäuse durch Isolatoren elektrisch isoliert. Die Isolatoren sind vorteilhafterweise scheibenförmig mit einem zentralen Durchgang. Die Isolatoren sind in den Figuren nicht dargestellt. Das Gehäuse der piezoelektrischen Kraftmesszellen A, B, C, D schützt die piezoelektrischen Aufnehmer 6, 6', 6", die Elektroden und die Isolatoren von Stössen und Schlägen, die während des Betriebs auftreten. Das Gehäuse schützt die piezoelektrischen Aufnehmer 6, 6', 6", die Elektroden und die Isolatoren aber auch vor schädlichen Umwelteinflüssen wie Verunreinigungen (Staub, Feuchtigkeit, usw.. Schliesslich schützt das Gehäuse die piezoelektrischen Aufnehmer 6, 6', 6", die Elektroden und die Isolatoren vor elektrischen und elektromagnetischen Störeffekten in Form von elektromagnetischer Strahlung.

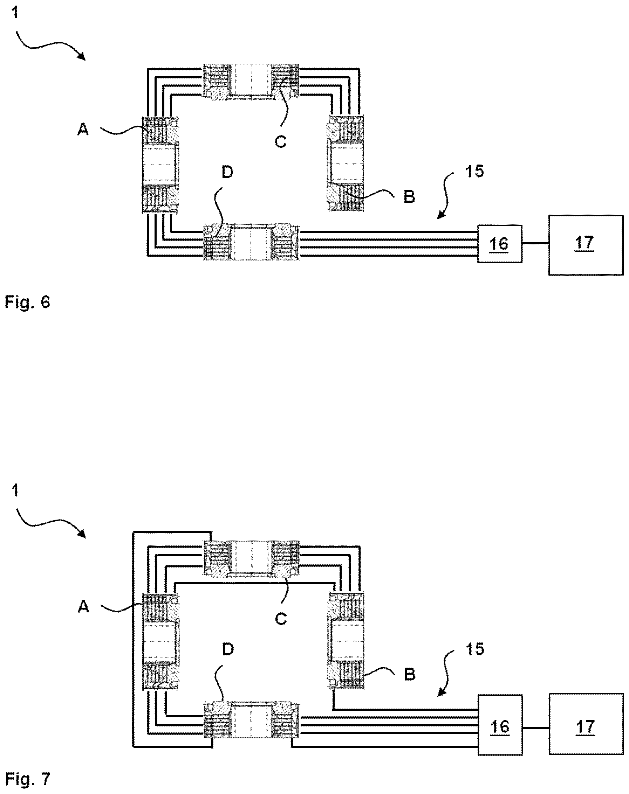

Die Fig. 6 bis 8 zeigen schematisch drei Ausführungsformen einer Signalableitung der Vorrichtung 1. Die von den Elektroden abgegriffenen elektrischen Polarisationsladungen werden über elektrische Durchführungen aus den Gehäusen der piezoelektrischen Kraftmesszellen A, B, C, D abgeleitet und ausserhalb der Gehäuse über Signalleitungen 15 an einen Ladungsverstärker 16 abgeleitet und von dort an eine Auswerteeinheit 17 abgeleitet. Vorteilhafterweise ist jede piezoelektrische Kraftmesszelle A, B, C, D über vier Signalleitungen 15 elektrisch kontaktiert. Über drei Signalleitungen 15 werden Signale der Signalelektroden der drei piezoelektrischen Aufnehmer 6, 6', 6" einer jeden piezoelektrischen Kraftmesszelle A, B, C, D abgeleitet. Über eine vierte Signalleitung 15 sind die Gegenelektroden der drei piezoelektrischen Aufnehmer 6, 6', 6" auf einem gemeinsamen Potenzial geerdet.

In der ersten Ausführungsform einer Signalableitung nach Fig. 6 sind die Signalelektroden und die Gegenelektroden in Reihe kontaktiert. Vorteilhafterweise sind die Signalelektroden und die Gegenelektrode der vier piezoelektrischen Kraftmesszelle A, B, C, D über drei Signalleitungen 15 in Form von Steckkontakten elektrisch miteinander kontaktiert. Die den ersten piezoelektrischen Aufnehmern 6 zugeordneten Signalelektroden sind elektrisch miteinander in Reihe kontaktiert und leiten über eine Signalleitung 15 als Signal eine Summe der elektrischen Polarisationsladungen ab, welche proportional zur ersten Kraftkomponente $F_x$ ist:

$$F_x = F_{xA} + F_{xB} + F_{xC} + F_{xD}$$

wobei der zweite Index die piezoelektrischen Kraftmesszelle A, B, C, D angibt. Die den zweiten piezoelektrischen Aufnehmern 6' zugeordneten Signalelektroden sind elektrisch miteinander in Reihe kontaktiert und leiten über eine Signalleitung 15 als Signal eine Summe der elektrischen Polarisationsladungen ab, welche proportional zur zweiten Kraftkomponente $F_y$ ist:

$$F_y = F_{yA} + F_{yB} + F_{yC} + F_{yD}$$

Die den dritten piezoelektrischen Aufnehmern 6" zugeordneten Signalelektroden sind elektrisch miteinander in Reihe kontaktiert und leiten über eine Signalleitung 15 als Signal eine Summe der elektrischen Polarisationsladungen ab, welche proportional zur dritten Kraftkomponente $F_z$ ist:

$$F_z = F_{zA} + F_{zB} + F_{zC} + F_{zD}$$

Die Vorrichtung 1 mit diesen in Reihe kontaktierten Signalelektroden ist ein Dreikomponentenaufnehmer der drei Kraftkomponenten $F_x$, $F_y$, $F_z$ der Kraft F.

In der zweiten Ausführungsform einer Signalableitung nach Fig. 7 sind die Signalelektroden und Gegenelektroden teilweise in Reihe und teilweise parallel kontaktiert. Vorteilhafterweise sind die Signalelektroden und die Gegenelektrode der vier piezoelektrischen Kraftmesszelle A, B, C, D über vier Signalleitungen 15 in Form von Steckkontakten elektrisch miteinander kontaktiert. Zwei erste den ersten piezoelektrischen Aufnehmern 6 zugeordnete Signalelektroden sind elektrisch miteinander in Reihe kontaktiert und leiten über eine Signalleitung 15 als Signal eine Summe der elektrischen Polarisationsladungen ab, welche proportional zur ersten Kraftkomponente $F_x$ ist:

$$F_x = F_{xC} + F_{xD}$$

Zwei erste den zweiten piezoelektrischen Aufnehmern 6' zugeordnete Signalelektroden sind elektrisch miteinander in Reihe kontaktiert und leiten über eine Signalleitung 15 als Signal eine Summe der elektrischen Polarisationsladungen ab, welche proportional zur zweiten Kraftkomponente $F_y$ ist:

$$F_y = F_{yA} + F_{yB}$$

Zwei weitere den ersten piezoelektrischen Aufnehmern 6 und zwei weitere den zweiten piezoelektrischen Aufnehmern 6' zugeordnete Signalelektroden sind elektrisch miteinander in Reihe kontaktiert und leiten über eine Signalleitung 15 als Signal eine Summe der elektrischen Polarisationsladungen ab, welche proportional zu einer dritten Momentkomponente $M_z$ eines Momentes M ist:

$$M_z = F_{xA} + F_{xB} + F_{yC} + F_{yD}$$

Die den dritten piezoelektrischen Aufnehmern 6" zugeordneten Signalelektroden sind elektrisch in Reihe miteinander kontaktiert und leiten über eine Signalleitung 15 als Signal eine Summe der elektrischen Polarisationsladungen ab, welche proportional zur dritten Kraftkomponente $F_z$ ist:

$$F_z = F_{zA} + F_{zB} + F_{zC} + F_{zD}$$

Über eine vierte Signalleitung 15 sind die Gegenelektroden der drei piezoelektrischen Aufnehmer 6, 6', 6" auf einem gemeinsamen Potenzial geerdet. Die Vorrichtung 1 mit diesen teilweise in Reihe und teilweise parallel kontaktierten Signalelektroden ist ein Vierkomponentenaufnehmer der drei Kraftkomponenten $F_x$, $F_y$, $F_z$ der Kraft F und der Momentkomponente $M_z$ eines Momentes M.

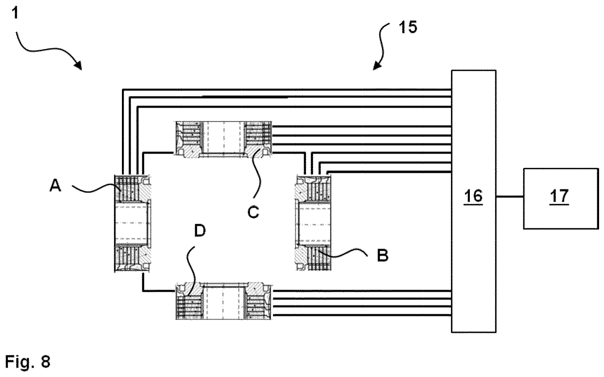

In der dritten Ausführungsform einer Signalableitung nach Fig. 8 sind die den piezoelektrischen Aufnehmern 6, 6', 6" zugeordneten Signalelektroden parallel kontaktiert, während die Gegenelektroden in Reihe kontaktiert sind. Von den Signalelektroden abgegriffene elektrische Polarisationsladungen eines jeden der drei piezoelektrischen Aufnehmer 6, 6', 6" der vier piezoelektrischen Kraftmesszellen A, B, C, D werden als Signale einzeln über zwölf Signalleitungen 15 abgeleitet. Die Vorrichtung 1 mit diesen parallel kontaktierten Signalelektroden ist ein Zwölfkomponentenaufnehmer. Die Signale werden einzeln im Ladungsverstärker 16 elektrisch verstärkt und an die Auswerteeinheit 17 abgeleitet. In der Auswerteeinheit 17 werden die verstärkten Signale weiter verarbeitet. So können die Signale für die Erfassung der Kraftkomponenten $F_x$, $F_y$, $F_z$ der Kraft F wie folgt in Beziehung gesetzt werden:

$$F_x = F_{xA} + F_{xB} + F_{xC} + F_{xD}$$

$$F_y = F_{yA} + F_{yB} + F_{yC} + F_{yD}$$

$$F_z = F_{zA} + F_{zB} + F_{zC} + F_{zD}$$

wobei der zweite Index die piezoelektrische Kraftmesszelle A, B, C, D angibt. Auch können die Signale für die Erfassung der Momentkomponenten $M_x$, $M_y$, $M_z$ eines Momentes M bezüglich des Mittelpunktes der Montageplattform 8 wie folgt in Beziehung gesetzt werden:

$$M_x = e/2 * (-F_{zA} + F_{zB})$$

$$M_y = e/2 * (-F_{zC} + F_{zD})$$

$$M_z = e/2 * (F_{xA} + F_{xB} + F_{yC} + F_{yD})$$

wobei e die Entfernung der piezoelektrischen Kraftmesszelle A, B, C, D zueinander ist.

Bei Kenntnis der vorliegenden Erfindung kann der Fachmann Variationen vornehmen, ohne den Rahmen der Erfindung zu verlassen. So kann der Fachmann für die piezoelektrischen Aufnehmer anstatt piezoelektrisches Kristallmaterial auch Piezokeramiken wie Blei-Zirkonat-Titanat (PZT), usw. oder Piezofolien wie Polyvinylidenfluorid (PVDF), usw. verwenden. Zudem kann der Fachmann mehr als eine piezoelektrische Kraftmesszelle an einer Endfläche einer Montageplattform anordnen.

**Bezugszeichenliste**

| | |
|---|---|
| A, B, C, D | piezoelektrische Kraftmesszelle |
| e | Entfernung |
| f | Eigenfrequenz |
| F | Kraft |
| $F_x$, $F_y$, $F_z$ | Kraftkomponente |
| m, m' | Gewicht |
| M | Moment |
| $M_x$, $M_y$, $M_z$ | Momentkomponente |
| X, Y, Z | Koordinatenachse |

| XY | horizontale Arbeitsebene |
| YZ, XZ | vertikale Ebene |
| 1 | Vorrichtung |
| 4 | Werkstück |
| 5 | Werkzeug |
| 6, 6', 6" | piezoelektrische Aufnehmer |
| 7, 7', 7", 7''' | Platte |
| 8 | Montageplattform |
| 9 | Ständer |
| 10, 10', 10", 10''' | Vorspannschraube |
| 15 | Signalleitung |
| 16 | Ladungsverstärker |
| 17 | Auswerteeinheit |
| 73 | Grundfläche der Platte |
| 81, 81' | erste Endfläche |
| 82, 82' | zweite Endfläche |
| 83 | Grundfläche der Montageplattform |

**Patentansprüche**

1. Vorrichtung (1) für die Kraft- und Momenterfassung; mit piezoelektrischen Kraftmesszellen (A, B), welche in einer horizontalen Arbeitsebene (XY) gegen Endflächen (81, 81') einer Montageplattform (8) mechanisch vorgespannt sind und Kraftkomponenten ($F_x$, $F_y$, $F_z$) erfassen; wobei die Montageplattform (8) ein Quader mit einer rechteckigen Grundfläche (83) ist; wobei die Montageplattform (8) vier rechteckige Endflächen (81, 81', 82, 82') aufweist, welche Endflächen (81, 81', 82, 82') senkrecht auf der Grundfläche (83) der Montageplattform (8) stehen; wobei zwei erste Endflächen (81, 81') in einer ersten vertikalen Ebene (YZ) angeordnet sind, und zwei zweite Endflächen (82, 82') in einer zweiten vertikalen Ebene (XZ) angeordnet sind; wobei die ersten Endflächen (81, 81') senkrecht zu den zweiten Endflächen (82, 82') angeordnet sind; wobei eine erste Koordinatenachse (X) normal zu den ersten Endflächen (81, 81') ist; wobei eine zweite Koordinatenachse (Y) normal zu den zweiten Endflächen (82, 82') ist; wobei erste piezoelektrische Kraftmesszellen (A, B) an den ersten Endflächen (81, 81') angeordnet sind; wobei zweite piezoelektrische Kraftmesszellen (C, D) an den zweiten Endflächen (82, 82') angeordnet sind; wobei die ersten piezoelektrischen Kraftmesszellen (A, B) eine erste Kraftkomponente ($F_x$) über einen Longitudinaleffekt und eine zweite Kraftkomponente ($F_y$) über einen Schubeffekt erfassen; wobei die zweiten piezoelektrischen Kraftmesszellen (C, D) die erste Kraftkomponente ($F_x$) über den Schubeffekt erfassen und die zweite Kraftkomponente ($F_y$) über den Longitudinaleffekt erfassen; wobei mittig an jeder Endfläche (81, 81', 82, 82') eine Kraftmesszelle (A, B, C, D) angeordnet ist; wobei die Vorrichtung (1) vier Platten (7, 7', 7", 7''') aufweist; wobei jede Platte (7, 7', 7", 7''') eine rechteckige Grundfläche (73) aufweist, welche Grundfläche (73) der Platten (7, 7', 7", 7''') in der horizontalen Arbeitsebene (XY) angeordnet ist; **dadurch gekennzeichnet, dass** die piezoelektrischen Kraftmesszellen (A, B, C, D) weitgehend vollständig in Aussparungen der Platten (7, 7', 7", 7''') angeordnet sind; dass die Platten (7, 7', 7", 7''') entlang der ersten und zweiten Koordinatenachse (X, Y) Durchgänge für Vorspannschrauben (10, 10', 10", 10''') aufweisen; und dass jede piezoelektrische Kraftmesszelle (A, B, C, D) mittels genau einer Vorspannschraube (10, 10', 10", 10''') mechanisch vorgespannt ist, welche Vorspannschraube (10, 10', 10", 10''') einen zentralen Durchgang der piezoelektrische Kraftmesszelle (A, B, C, D) mittig durchdringt und in einem Gewinde der Endfläche (81, 81', 82, 82') verschraubt ist.

2. Vorrichtung (1) nach Anspruch 1, **dadurch gekennzeichnet, dass** die erste Kraftkomponente ($F_x$) und die zweite Kraftkomponente ($F_y$) je einmal über den Schubeffekt und einmal über den Longitudinaleffekt erfasst, wodurch die Vorrichtung (1) in der horizontalen Arbeitsebene (XY) eine isotrope Empfindlichkeit aufweist.

3. Vorrichtung (1) nach einem der Ansprüche 1 oder 2, **dadurch gekennzeichnet, dass** die erste piezoelektrische Kraftmesszelle (A, B) eine dritte Kraftkomponente ($F_z$) über den Schubeffekt erfasst; dass die zweite piezoelektrische Kraftmesszelle (C, D) die dritte Kraftkomponente ($F_z$) über den Schubeffekt erfasst.

4. Vorrichtung (1) nach Anspruch 1, **dadurch gekennzeichnet, dass** die piezoelektrischen Kraftmesszellen (A, B, C, D) in einer gleichen Entfernung (e) zueinander angeordnet sind und/oder dass die piezoelektrischen Kraftmesszellen (A, B, C, D) kreuzförmig an der Arbeitsplattform (8) angeordnet sind.

**5.** Vorrichtung (1) nach einem der Ansprüche 1 oder 4, **dadurch gekennzeichnet, dass** ein Ausnutzungsverhältnis einer Summe von Flächen von Hohlzylinderdurchmessern der piezoelektrischen Kraftmesszellen (A, B, C, D) zu einer Summe von Flächen der Endflächen (81, 81', 82, 82') grösser/gleich 25%, vorzugsweise 50% ist.

**6.** Vorrichtung (1) nach einem der Ansprüche 1, 4 und 5, **dadurch gekennzeichnet, dass** entlang der ersten Koordinatenachse (X) eine Steifigkeit eine Summe einer Druckfestigkeit der piezoelektrischen Kraftmesszellen (A, B) und einer Schubsteifigkeit der piezoelektrischen Kraftmesszellen (C, D) ist; dass entlang der zweiten Koordinatenachse (Y) die Steifigkeit eine Summe der Druckfestigkeit der piezoelektrischen Kraftmesszellen (C, D) und der Schubsteifigkeit der piezoelektrischen Kraftmesszellen (A, B) ist, wodurch die Vorrichtung (1) in der horizontalen Arbeitsebene (XY) eine isotrope Steifigkeit aufweist; und dass eine Eigenfrequenz (f) der Vorrichtung (1) in der horizontalen Arbeitsebene (XY) isotrop ist.

**7.** Vorrichtung (1) nach einem der Ansprüche 1, 4 bis 6, **dadurch gekennzeichnet, dass** jede piezoelektrische Kraftmesszelle (A, B, C, D) mehrere piezoelektrische Aufnehmer 6, 6', 6" aufweist; dass eine zu erfassende Kraft (F) und/oder ein zu erfassendes Moment (M) auf Oberflächen der piezoelektrischen Aufnehmer (6, 6', 6") einwirkt und auf diesen Oberflächen elektrische Polarisationsladungen erzeugt; dass den Oberflächen der piezoelektrischen Aufnehmer (6, 6', 6") Signalelektroden zugeordnet sind, welche Signalelektroden die elektrischen Polarisationsladungen abgreifen; und dass Signalleitungen (15) die abgegriffenen elektrischen Polarisationsladungen als Signale ableiten.

**8.** Vorrichtung (1) nach Anspruch 7, **dadurch gekennzeichnet,**

- **dass** die den ersten piezoelektrischen Aufnehmern (6) zugeordneten Signalelektroden elektrisch miteinander in Reihe kontaktiert sind und über die Signalleitung (15) als Signal eine Summe der elektrischen Polarisationsladungen ableiten, welche proportional zur ersten Kraftkomponente ($F_x$) der Kraft (F) ist;
- **dass** die den zweiten piezoelektrischen Aufnehmern (6') zugeordneten Signalelektroden elektrisch miteinander in Reihe kontaktiert sind und über die Signalleitung (15) als Signal eine Summe der elektrischen Polarisationsladungen ableiten, welche proportional zur zweiten Kraftkomponente ($F_y$) der Kraft (F) ist; und
- **dass** die den dritten piezoelektrischen Aufnehmern (6") zugeordneten Signalelektroden elektrisch miteinander in Reihe kontaktiert sind und über die Signalleitung (15) als Signal eine Summe der elektrischen Polarisationsladungen ableiten, welche proportional zur dritten Kraftkomponente ($F_z$) der Kraft (F) ist.

**9.** Vorrichtung (1) nach Anspruch 7, **dadurch gekennzeichnet,**

- **dass** zwei erste den ersten piezoelektrischen Aufnehmern (6) zugeordnete Signalelektroden elektrisch miteinander in Reihe kontaktiert sind und über eine Signalleitung (15) als Signal eine Summe der elektrischen Polarisationsladungen ableiten, welche proportional zur ersten Kraftkomponente ($F_x$) der Kraft (F) ist;
- **dass** zwei erste den zweiten piezoelektrischen Aufnehmern (6') zugeordnete Signalelektroden elektrisch miteinander in Reihe kontaktiert sind und über eine Signalleitung (15) als Signal eine Summe der elektrischen Polarisationsladungen ableiten, welche proportional zur zweiten Kraftkomponente ($F_y$) der Kraft (F) ist;
- **dass** zwei weitere den ersten piezoelektrischen Aufnehmern (6) und zwei weitere den zweiten piezoelektrischen Aufnehmern (6') zugeordnete Signalelektroden elektrisch miteinander in Reihe kontaktiert sind und über eine Signalleitung (15) als Signal eine Summe der elektrischen Polarisationsladungen ableiten, welche proportional zu einer dritten Momentkomponente ($M_z$) eines Momentes (M) ist; und
- **dass** die den dritten piezoelektrischen Aufnehmern (6") zugeordneten Signalelektroden elektrisch in Reihe miteinander kontaktiert sind und über eine Signalleitung (15) als Signal eine Summe der elektrischen Polarisationsladungen ableiten, welche proportional zur dritten Kraftkomponente ($F_z$) der Kraft (F) ist.

**10.** Vorrichtung (1) nach Anspruch 7, **dadurch gekennzeichnet, dass** die Signalelektroden parallel kontaktiert sind und über Signalleitungen (15) als Signale elektrische Polarisationsladungen eines jeden piezoelektrischen Aufnehmers (6, 6', 6") einzeln ableiten.

**Claims**

**1.** A device (1) for the detection of forces and moments comprising piezoelectric load cells (A, B) that are mechanically pretensioned in a horizontal working plane (XY) against end faces (81, 81') of a mounting platform (8) and detect force components ($F_x$, $F_y$, $F_z$); said mounting platform (8) being a cuboid having a rectangular base (83); said mounting platform (8) having four rectangular end faces (81, 81', 82, 82'), said end faces (81, 81', 82, 82') running perpendicularly with respect to the base (83) of the mounting platform (8); two first end faces (81, 81') being arranged in a first vertical plane (YZ) and two second end faces (82, 82') being arranged in a second vertical plane (XZ); said first end faces (81, 81') being arranged perpendicularly with respect to said second end faces (82, 82'); a first coordinate axis (X) being normal to said first end faces (81, 81') and a second coordinate axis (Y) being normal to said second end faces (82, 82'); wherein first piezoelectric load cells (A, B) are arranged at said first end faces (81, 81'); and wherein second piezoelectric load cells (C, D) are arranged at said second end faces (82, 82'); wherein said first piezoelectric load cells (A, B) detect a first force component ($F_x$) by a longitudinal effect and detect a second force component ($F_y$) by a shear effect; wherein said second piezoelectric load cells (C, D) detect the first force component ($F_x$) by the shear effect and detect the second force component ($F_y$) by the longitudinal effect; wherein one load cell (A, B, C, D) is arranged in the center of each of the end faces (81, 81', 82, 82'); wherein said device (1) comprises four plates (7, 7', 7", 7"'); each plate (7, 7', 7", 7"') having a rectangular base (73), said base (73) of the plates (7, 7', 7", 7"') being arranged in the horizontal working plane (XY) ; **characterized in that** said piezoelectric load cells (A, B, C, D) are substantially completely accommodated within recesses of the plates (7, 7', 7", 7"'); said plates (7, 7', 7", 7"') comprise pass-through holes for pretensioning screws (10, 10', 10", 10"') along said first and second coordinate axes (X, Y); and **in that** each piezoelectric load cell (A, B, C, D) is mechanically pretensioned by exactly one pretensioning screw (10, 10', 10", 10"'), said pretensioning screw (10, 10', 10", 10"') centrally penetrating a central pass-through hole of the piezoelectric load cell (A, B, C, D) and being screwed with a thread of the end face (81, 81', 82, 82').

2.  The device (1) according to claim 1, **characterized in that** each of the first force component ($F_x$) and the second force component ($F_y$) are detected on the one hand by the shear effect and on the other hand by the longitudinal effect so that the device (1) has an isotropic sensitivity in the horizontal working plane (XY).

3.  The device (1) according to any of the claims 1 or 2, **characterized in that** the first piezoelectric load cell (A, B) detects a third force component ($F_z$) by the shear effect and **in that** the second piezoelectric load cell (C, D) detects said third force component ($F_z$) by the shear effect.

4.  The device (1) according to claim 1, **characterized in that** the piezoelectric load cells (A, B, C, D) are spaced at an equal distance (e) from each other and/or **in that** the piezoelectric load cells (A, B, C, D) are arranged on the working platform (8) in the form of a cross.

5.  The device (1) according to any of the claims 1 or 4, **characterized in that** a use ratio of a sum of areas of hollow cylinder diameters of the piezoelectric load cells (A, B, C, D) and a sum of areas of the end faces (81, 81', 82, 82') is greater than/equal to 25%, preferably 50%.

6.  The device (1) according to any of the claims 1, 4 and 5, **characterized in that** a stiffness along the first coordinate axis (X) is a sum of a compressive strength of the piezoelectric load cells (A, B) and a shear stiffness of the piezoelectric load cells (C, D); the stiffness along the second coordinate axis (Y) is a sum of the compressive strength of the piezoelectric load cells (C, D) and the shear stiffness of the piezoelectric load cells (A, B) whereby the device (1) exhibits an isotropic stiffness in the horizontal working plane (XY); and **in that** a natural frequency (f) of the device (1) is isotropic in the horizontal working plane (XY).

7.  The device (1) according to any of the claims 1, 4 to 6, **characterized in that** each piezoelectric load cell (A, B, C, D) comprises a plurality of piezoelectric transducers 6, 6', 6"; wherein a force (F) to be detected and/or a moment (M) to be detected acts onto surfaces of said piezoelectric transducers (6, 6', 6") generating electric polarization charges on these surfaces; **in that** signal electrodes are associated with the surfaces of the piezoelectric transducers (6, 6', 6"), said signal electrodes picking up said electric polarization charges; and **in that** signal lines (15) transmit said picked-up electric polarization charges as signals.

8.  The device (1) according to claim 7, **characterized in**

    - **that** the signal electrodes associated with the first piezoelectric transducers (6) are electrically contacted with each other in series and transmit, as said signal, by the signal line (15) a sum of the electric polarization charges that is proportional to the first force component ($F_x$) of the force (F);
    - **that** the signal electrodes associated with the second piezoelectric transducers (6') are electrically contacted with each other in series and transmit, as the signal, by the signal line (15) a sum of the electric polarization charges that is proportional to the second force component ($F_y$) of the force (F); and

- **that** the signal electrodes associated with the third piezoelectric transducers (6") are electrically contacted with each other in series and transmit, as the signal, by the signal line (15) a sum of the electric polarization charges that is proportional to the third force component ($F_z$) of the force (F).

9. The device (1) according to claim 7, **characterized in**

- **that** two first signal electrodes associated with the first piezoelectric transducers (6) are electrically contacted with each other in series and transmit, as the signal, by a signal line (15) a sum of the electric polarization charges that is proportional to the first force component ($F_x$) of the force (F);
- **that** two first signal electrodes associated with the second piezoelectric transducers (6') are electrically contacted with each other in series and transmit, as the signal, by a signal line (15) a sum of the electric polarization charges that is proportional to the second force component ($F_y$) of the force (F);
**that** two further signal electrodes associated with the first piezoelectric transducers (6) and two further signal electrodes associated with the second piezoelectric transducers (6') are electrically contacted with each other in series and transmit, as the signal, by a signal line (15) a sum of the electric polarization charges that is proportional to a third moment component ($M_z$) of a moment (M); and
- **that** the signal electrodes associated with the third piezoelectric transducers (6") are electrically contacted with each other in series and transmit, as the signal, by a signal line (15) a sum of the electric polarization charges that is proportional to the third force component ($F_z$) of the force (F).

10. The device (1) according to claim 7, **characterized in that** the signal electrodes are contacted in parallel and transmit, as said signals, by signal lines (15) electric polarization charges of each piezoelectric transducer (6, 6', 6") individually.

**Revendications**

1. Dispositif (1) pour la détection des forces et des moments comprenant des cellules dynamométriques (A, B) piézoélectriques mécaniquement précontraintes contre des faces d'extrémité (81, 81") d'une plate-forme de montage (8) dans un plan de travail horizontal (XY) et détectant des composantes de force ($F_x$, $F_y$, $F_z$) ; dans lequel ladite plate-forme de montage (8) est un parallélépipède ayant une base rectangulaire (83); ladite plate-forme de montage (8) ayant quatre faces d'extrémité (81, 81', 82, 82") rectangulaires, lesdites faces d'extrémité (81, 81", 82, 82') étant perpendiculaires à ladite base (83) de ladite plate-forme de montage (8); dans lequel deux premières faces d'extrémité (81, 81') sont disposées dans un premier plan vertical (YZ) et deux secondes faces d'extrémité (82, 82') sont disposées dans un second plan vertical (XZ); dans lequel lesdites premières faces d'extrémité (81, 81') sont disposées perpendiculairement auxdites secondes faces d'extrémité (82, 82'); dans lequel un premier axe de coordonnées (X) est normal auxdites premières faces d'extrémité (81, 81'); dans lequel un second axe de coordonnées (Y) est normal auxdites secondes faces d'extrémité (82, 82'); dans lequel des premières cellules dynamométriques (A, B) piézoélectriques sont disposées au niveau desdites premières faces d'extrémité (81, 81'); dans lequel des secondes cellules dynamométriques (C, D) piézoélectriques sont disposées au niveau des secondes faces d'extrémité (82, 82'); dans lequel les premières cellules dynamométriques (A, B) piézoélectriques détectent une première composante de force ($F_x$) par un effet longitudinal et une seconde composante de force ($F_y$) par un effet de cisaillement; dans lequel les secondes cellules dynamométriques (C, D) piézoélectriques détectent ladite première composante de force ($F_x$) par l'intermédiaire de l'effet de cisaillement et ladite seconde composante de force ($F_y$) par l'intermédiaire de l'effet longitudinal; dans lequel une cellule dynamométrique (A, B, C, D) est disposée centralement sur chacune des faces d'extrémité (81, 81', 82, 82'); ledit dispositif (1) comprenant quatre plaques (7, 7', 7", 7'''); chaque plaque (7, 7', 7", 7''') ayant une base rectangulaire (73), laquelle base (73) des plaques (7, 7', 7", 7''') est disposée dans le plan de travail horizontal (XY); **caractérisé en ce que** lesdites cellules dynamométriques (A, B, C, D) piézoélectriques sont disposées sensiblement complètement dans des évidements des plaques (7, 7', 7", 7'''); **en ce que** les plaques (7, 7', 7", 7''') présentent des passages pour des vis de précontrainte (10, 10', 10", 10''') le long des premier et second axes de coordonnées (X, Y); et **en ce que** chaque cellule dynamométrique (A, B, C, D) piézoélectrique est précontraint mécaniquement au moyen d'exactement une vis de précontrainte (10, 10', 10", 10'''), laquelle vis de précontrainte (10, 10', 10", 10''') traverse un passage central du cellule dynamométrique (A, B, C, D) piézoélectrique au centre de celui-ci et est vissée dans un filetage de la face d'extrémité (81, 81', 82, 82').

2. Dispositif (1) selon la revendication 1, **caractérisé en ce que** ladite première composante de force ($F_x$) et ladite seconde composante de force ($F_y$) sont détectées chacune d'une part par l'effet de cisaillement et d'autre part par l'effet longitudinal de manière que le dispositif (1) présente une sensibilité iso-tropique dans le plan de travail horizontal (XY) .

3. Dispositif (1) selon l'une quelconque des revendications 1 ou 2, **caractérisé en ce que** la première cellule dynamométrique (A, B) piézoélectrique détecte une troisième composante de force ($F_z$) par l'effet de cisaillement et **en ce que** la seconde cellule dynamométrique (C, D) piézoélectrique détecte la troisième composante de force ($F_z$) par l'effet de cisaillement.

4. Dispositif (1) selon la revendication 1, **caractérisé en ce que** lesdites cellules dynamométriques (A, B, C, D) piézoélectriques sont disposées les unes des autres à une distance égale (e) et/ou **en ce que** lesdites cellules dynamométriques (A, B, C, D) piézoélectriques sont disposées sur la plate-forme de travail (8) en forme d'une croix.

5. Dispositif (1) selon l'une quelconque des revendications 1 ou 4, **caractérisé en ce qu'**un rapport d'utilisation entre une somme des surfaces des diamètres des cylindres creux des cellules dynamométriques (A, B, C, D) piézoélectriques et une somme des surfaces des faces d'extrémité (81, 81', 82, 82') est supérieur/égal à 25%, de préférence 50%.

6. Dispositif (1) selon l'une quelconque des revendications 1, 4 et 5, **caractérisé en ce qu'**une rigidité le long du premier axe de coordonnées (X) est une somme d'une résistance à la compression des cellules dynamométriques (A, B) piézoélectriques et d'une rigidité au cisaillement des cellules dynamométriques (C, D) piézoélectriques; **en ce qu'**une rigidité le long du seconde axe de coordonnées (Y) est une somme de la résistance à la compression des cellules dynamométriques (C, D) piézoélectriques et de la rigidité au cisaillement des cellules dynamométriques (A, B) piézoélectriques ce qui confère une rigidité isotrope dans le plan de travail horizontal (XY) au dispositif (1); et **en ce qu'**une fréquence naturelle (f) du dispositif (1) est isotrope dans le plan de travail horizontal (XY).

7. Dispositif (1) selon l'une quelconque des revendications 1, 4 à 6, **caractérisé en ce que** chaque cellule dynamométrique (A, B, C, D) piézoélectrique comporte une pluralité de transducteurs piézoélectriques 6, 6', 6"; **en ce qu'**une force (F) à détecter et/ou un moment (M) à détecter agit sur des surfaces des transducteurs piézoélectriques (6, 6', 6") générant des charges de polarisation électrique sur ces surfaces; **en ce que** lesdites surfaces des transducteurs piézoélectriques (6, 6', 6") sont associées à des électrodes de signal, lesquelles électrodes de signal prélèvent les charges de polarisation électrique; et **en ce que** lesdites charges de polarisation électrique prélevées sont transmises par des lignes de signal (15) en tant que signaux.

8. Dispositif (1) selon la revendication 7, **caractérisé en ce**

- **que** lesdites électrodes de signal associées aux premiers transducteurs piézoélectriques (6) sont mises en contact électrique en série les unes avec les autres et transmettent par la ligne de signal (15) en tant que signal une somme des charges de polarisation électrique qui est proportionnelle à la première composante de force ($F_x$) de la force (F);
- **que** les électrodes de signal associées aux seconds transducteurs piézoélectriques (6') sont mises en contact électrique en série les unes avec les autres et transmettent par la ligne de signal (15) en tant que signal une somme des charges de polarisation électrique qui est proportionnelle à la seconde composante de force ($F_y$) de la force (F); et en ce
- **que** les électrodes de signal associées aux troisièmes transducteurs piézoélectriques (6") sont mises en contact électrique en série les unes avec les autres et transmettent par la ligne de signal (15) en tant que signal une somme des charges de polarisation électrique qui est proportionnelle à la troisième composante de force ($F_z$) de la force (F).

9. Dispositif (1) selon la revendication 7, **caractérisé en ce**

- **que** deux premières électrodes de signal associées aux premiers transducteurs piézoélectriques (6) sont mises en contact électrique en série l'une avec l'autre et transmettent par une ligne de signal (15) en tant que signal une somme des charges de polarisation électrique qui est proportionnelle à la première composante de force ($F_x$) de la force (F);
- **que** deux premières électrodes de signal associées aux secondes transducteurs piézoélectriques (6') sont en contact électrique en série l'une avec l'autre et transmettent par une ligne de signal (15) en tant que signal une somme des charges de polarisation électrique qui est proportionnelle à la seconde composante de force ($F_y$) de la force (F);
- **que** deux autres électrodes de signal associées aux premiers transducteurs piézoélectriques (6) et deux autres électrodes de signal associées aux seconds transducteurs piézoélectriques (6') sont mises en contact électrique en série et transmettent par une ligne de signal (15) en tant que signal une somme des charges de polarisation électrique qui est proportionnelle à une troisième composante de moment ($M_z$) d'un moment (M); et en ce

- **que** les électrodes de signal associées aux troisièmes transducteurs piézoélectriques (6") sont mises en contact électrique en série les unes avec les autres et transmettent par une ligne de signal (15) en tant que signal une somme des charges de polarisation électrique qui est proportionnelle à la troisième composante de force ($F_z$) de la force (F) .

10. Dispositif (1) selon la revendication 7, **caractérisé en ce que** lesdites électrodes de signal sont contactées en parallèle et transmettent par des lignes de signal (15) en tant que signaux les charges de polarisation électrique de chaque transducteur piézoélectrique (6, 6', 6") individuellement.

Fig. 1

Fig. 2

1

Y ⊗ X

Z

81'

7'

10'

A

8

e

83

81

B

10'''

7'''

Fig. 3

1

Y ⊗ X

Z

7'

10'

A

81'

8

e

83

81

B

10'''

7'''

Fig. 5

Fig. 4

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0806643 A2

- US 20150120051 A1